# EUROPÄISCHE PATENTANMELDUNG

(11) **EP 1 510 892 A1**
(43) Veröffentlichungstag der Anmeldung: **02.03.2005**
(21) Anmeldenummer: 03018411.3
(22) Anmeldetag: 13.08.2003
(51) Int. Cl.: G05B 19/042

(54) **Verfahren und Steuerungssystem zum Betrieb einer mehrere Komponenten umfassenden technischen Anlage, insbesondere einer Verbrennungsanlage zum Erzeugen von elektrischer Energie**

(71) Anmelder: SIEMENS AKTIENGESELLSCHAFT, 80333 München (DE)
(72) Erfinder: Schreiber, Roland, 36341 Lauterbach (DE)

(57) **Zusammenfassung**

Bei einem erfindungsgemäßen Verfahren und eines entsprechenden Steuerungssystems (1) ist es vorgesehen, dass während des Betriebs der technischen Anlage jede Komponente, die in oder außer Betrieb geht, eine Bewertung mindestens einer anderen Komponente mit einer Wertzahl auslöst, die Wertzahlen jeder Komponente aufsummiert werden und aus den aufsummierten Wertzahlen diejenigen Komponenten ermittelt werden, welche als nächstes zu- oder abzuschalten sind. Dabei wird weiterhin mindestens einer Komponente mindestens ein Initialisierungswert (I1,I2,I3...I8) zugeordnet und zu den aufsummierten Wertzahlen der Komponente addiert.

## Beschreibung

Verfahren und Steuerungssystem zum Betrieb einer mehrere Komponenten umfassenden technischen Anlage, insbesondere einer Verbrennungsanlage zum Erzeugen von elektrischer Energie

Die Erfindung betrifft ein Verfahren und Steuerungssystem zum Betrieb eine mehrere Komponenten umfassenden technischen Anlage, wobei während des Betriebs der technischen Anlage jede Komponente, die in oder außer Betrieb geht, eine Bewertung mindestens einer anderen Komponente mit einer Wertzahl auslöst, die Wertzahlen jeder Komponente aufsummiert werden und aus den aufsummierten Wertzahlen diejenigen Komponenten ermittelt werden, welche als nächstes zu- oder abzuschalten sind.

Bevorzugt ist die technische Anlage eine Verbrennungsanlage zum Erzeugen elektrischer Energie.

Technische Anlagen umfassen in der Regel mehrere Komponenten, welche z.B. entweder jeweils eine spezielle Funktion der technischen Anlage realisieren oder welche gemeinschaftlich eine bestimmte Funktion erfüllen.

Ein Beispiel für eine technische Anlage, bei der Komponenten mit unterschiedlichen Funktionen zusammenwirken, ist z.B. ein Kraftwerk zum Erzeugen von elektrischer Energie. Um in einer derartigen technischen Anlage elektrische Energie erzeugen zu können, ist das Zusammenspiel zahlreicher Komponenten mit jeweils unterschiedlicher Aufgabe notwendig:
Als wichtigste Komponenten seien hier z.B. die Turbinen, die Generatoren, die Schutzsysteme und das Leitsystem genannt. Ein effizienter Betrieb einer derartigen technischen Anlage ist nur möglich, wenn der Einsatz der genannten Komponenten aufeinander abgestimmt ist.

In modernen technischen Anlagen wird das genannte Zusammenspiel der Komponenten der technischen Anlage üblicherweise durch ein computergestütztes Leitsystem koordiniert und überwacht. Der Automatisierungsgrad ist dabei oftmals sehr hoch, so dass menschliche Eingriffe in den Betrieb der technischen Anlage nur noch dann notwendig sind, wenn die automatische Steuerung einen aktuellen Betriebszustand der technischen Anlage beherrschen muss, für den in den Steuerungsprogrammen des Leitsystems keine Lösung oder Verfahrensweise vorgesehen ist. Es kann sich dabei z.B. um Störfälle handeln, welche beim Entwurf des Leitsystems nicht in allen Einzelheiten berücksichtigt werden konnten, aber auch um an sich - aus menschlicher Sicht - einfache Betriebsübergänge während des Betriebs der technischen Anlage, welche aber oftmals nur mit erheblichem Aufwand als steuerungstechnische Programme abgebildet werden können. Dies kann z.B. dann der Fall sein, wenn während des Betriebs der technischen Anlage eine Vielzahl von möglichen Betriebszuständen auftreten kann und es aus jedem dieser Betriebszustände möglich sein soll, einen gewünschten Betriebszustand zu erreichen.

Ein Steuerungsprogramm müsste dann für jeden dieser möglichen Betriebszustände zugehörige Steueranweisungen enthalten, um den gewünschten Betriebszustand anzufahren. Die Erfassung aller möglichen Betriebszustände einer technischen Anlage in einem Steuerprogramm ist oftmals vorab nicht möglich, so dass in manchen Fällen das Betriebspersonal der technischen Anlage das Bedienen der Komponenten der technischen Anlage manuell übernehmen muss.

Bei einer technischen Anlage, bei der eine Anzahl von Komponenten zusammenwirken, um eine bestimmte Funktion zu erfüllen, liegen die vorher beschriebenen Probleme ähnlich. Ein Beispiel für eine derartige technische Anlage ist eine Verbrennungsanlage zum Erzeugen von elektrischer Energie, welche eine Mehrzahl von in einem Brennraum angeordnete Brenner umfasst. Der Einsatz der Brenner soll dabei derart geschehen, dass der zugeführte Brennstoff möglichst effizient ausgenutzt wird, um eine geforderte Menge an elektrischer Energie zu erzeugen und die Anlage wirtschaftlich zu betreiben. Des Weiteren ist ein schonender Betrieb einer derartigen Anlage anzustreben, welcher beispielsweise durch eine gleichmäßige Feuerverteilung im Brennraum erreicht werden kann.

Um den zugeführten Brennstoff möglichst effizient auszunutzen, ist es erforderlich, besonders beim Zu- und Abfahren der technischen Anlage und im Teillastbereich - wenn also nicht die maximal mögliche Erzeugungsmenge an elektrischer Energie von der Verbrennungsanlage abgefordert wird und alle Brenner gleichzeitig feuern -, die Brenner derart gezielt zu- bzw. abzuschalten, dass eine möglichst gleichmäßige Feuerverteilung im Brennraum zu jedem Zeitpunkt des Betriebs der technischen Anlage gewährleistet ist.

Die Betriebspraxis vieler Kraftwerke zeigt, dass z.B. bei der Lösung des oben genannten Problems der gleichmäßigen Feuerverteilung in einem Brennraum oftmals auf eine automatische Zu- bzw. Abschaltung der Hauptbrenner verzichtet wird, da die üblicherweise zur Lösung derartiger Aufgaben eingesetzten Verknüpfungs- oder Schrittsteuerungen nur mit sehr großem Aufwand realisierbar sind, wobei die dabei gegebenenfalls eingesetzten Steuerprogramme darüber hinaus sehr unübersichtlich sind. Der hohe Aufwand ist darin begründet, dass beim Betrieb einer Verbrennungsanlage mit einer Mehrzahl von Brennern praktisch jeder Betriebszustand zwischen Leerlauf und Volllast einschließlich der zugehörigen Zu- und Abfahrvorgänge vorliegen kann. Ein Steuerprogramm müsste dann für jeden dieser zahlreichen Betriebszustände entsprechende Steueranweisungen ausführen können, um einen effizienten Betrieb der technischen Anlage zu gewährleisten.

Um das beschriebene Problem des hohen Aufwands wenigstens teilweise zu umgehen, sind in vielen Kraftwerken Verknüpfungs- und Schrittsteuerungen im Einsatz, bei welchen nur für eine Untermenge aller möglichen Betriebszustände entsprechende Steuerbefehle vorgesehen sind. Durch diese bewusste Beschränkung auf definierte Betriebsfälle sind derartige Steuerung jedoch wenig flexibel und menschliches Eingreifen ist weiterhin für all diejenigen Betriebsfälle notwendig, für die in den Steuerungen keine Steuerbefehle vorgesehen sind. Um z.B. das Problem einer gleichmäßigen Feuerverteilung in einem Brennraum einer Verbrennungsanlage zu lösen, sind auch Lösungen denkbar, bei welchen zusätzliche Messvorrichtungen vorgesehen sind, z.B. zur Messung des Temperaturprofils im Brennraum, um dann diese Messungen auszuwerten und damit den Einsatz der Brenner zu steuern.

Nachteilig dabei ist, dass zusätzliche Einrichtungen, wie z.B. die genannten Messeinrichtungen zur Ermittlung des Temperaturprofils, notwendig sind. Weiterhin müssen diese zusätzlichen Messungen ausgewertet werden, um daraus Steuerbefehle für den Einsatz der Brenner abzuleiten. Der Zusatzaufwand ist dabei oftmals beträchtlich. Außerdem werden der technischen Anlage durch das Hinzufügen von zusätzlichen Messeinrichtungen Störquellen aufgezwungen, welche bei Nichtfunktion zum Stillstand der technischen Anlage führen können.

Aus der WO02/052199 ist eine gattungsgemäße Vorrichtung (siehe FIG 1) bekannt, mittels welcher ein wirtschaftlicher Betrieb einer mehrere Komponenten umfassenden technischen Anlage dadurch erreicht wird, dass laufend durch jede Komponente, die in oder außer Betrieb geht, eine Bewertung mindestens einer anderen Komponente mit einer Wertzahl ausgelöst wird, die Wertzahlen jeder Komponente aufsummiert werden und aus den aufsummierten Wertzahlen diejenigen Komponenten ermittelt werden, welche als nächstes zu- oder abzuschalten sind.

Die in dieser Schrift offenbarten Verfahren und Vorrichtungen gestatten ausgehend von einem aktuellen Betriebszustand der Komponenten die Ermittlung von Zu- und/oder Abschaltbefehlen für Komponenten, so dass ein gewünschter Betriebszustand der technischen Anlage erreicht wird. Beispielsweise wird bei einer Feuerungsanlage durch die eingesetzten Brenner ein symmetrisches Flammenbild gebildet.

Dies wird dadurch erreicht, dass jeder Komponente mindestens eine Wertzahl bezüglich ihrer Anordnung in der technischen Anlage zugeordnet wird, sowie mindestens eine weitere Wertzahl, welche einen Betriebszustand der technischen Anlage umfasst. Für jede Komponente wird dann durch Summenbildung eine Summenwertzahl ermittelt, so dass aufgrund der Summenwertzahlen der Komponenten ermittelt werden kann, welche Komponenten als nächstes in oder außer Betrieb gehen sollen.

Nachteilig dabei ist, dass ausgehend von einer sich außer Betrieb befindlichen Anlage (alle Komponenten sind außer Betrieb) oder ausgehend von einer Betriebssituation, in welcher sich alle Komponenten der technischen Anlage in Betrieb befinden, mehrere Möglichkeiten existieren, welche Komponenten als nächstes in oder außer Betrieb gehen sollen. Ganz allgemein gibt es in der Regel auch weitere Betriebszustände der technischen Anlage, von welchen ausgehend mehrere zueinander gleichwertige Zu- oder Abschaltvarianten möglich sind.

Ein Verfahren und eine Vorrichtung gemäß der W002/052199 können in solchen Fällen nicht eindeutig festlegen, welche Komponenten als nächstes zu- oder abgeschaltet werden sollen, um einen gewünschten Betriebszustand zu erreichen.

Der Erfindung liegt daher die Aufgabe zugrunde, ein Verfahren sowie eine entsprechende Vorrichtung der eingangs genannten Art anzugeben, mittels welcher ausgehend von möglichst vielen unterschiedlichen Betriebssituationen der technischen Anlage eindeutig ermittelt werden kann, welche Komponenten als nächstes zu- oder abzuschalten sind.

Bezüglich des Verfahrens wird die Aufgabe durch ein gattungsgemäßes Verfahren der eingangs genannten Art gelöst, wobei mindestens eine Komponente mindestens ein Initialisierungswert zugeordnet und dieser Initialisierungswert zu den aufsummierten Wertzahlen der Komponente addiert wird.

Dieser Initialisierungswert verändert dabei den Summenwert der Wertzahlen mindestens einer Komponente. Ein anfänglich symmetrischer Betriebsfall der technischen Anlage, welcher sich ursprünglich auch in einer symmetrischen Verteilung der Summenwerte der Komponenten widergespiegelt hat, wird dadurch bezüglich der Verteilung der Wertzahlen zumindest leicht unsymmetrisch gemacht, so dass aus den erfindungsgemäß ermittelten Summenwerten, welcher der Summe aus den aufsummierten Wertzahlen und den Initialisierungswerten entsprechen, nun eine eindeutige Entscheidung darüber möglich ist, welche Komponenten als nächstes zu- oder abgeschaltet werden sollen.

Der Initialisierungswert kann dabei bevorzugt eine numerische Konstante umfassen, welche zu den aufsummierten Wertzahlen der entsprechenden Komponente addiert wird.

Dadurch ist sichergestellt, dass die Priorität der Komponente, mit welcher sie in oder außer Betrieb gehen soll, verschoben wird, so dass sich in der weiteren Verarbeitung der Summenwerte der Komponenten ein eindeutiges Ergebnis bezüglich der Zu- oder Abschaltung ergibt.

Der Initialisierungswert kann dabei manuell vorgegeben werden oder durch eine vorgeschaltete Verarbeitungseinheit ermittelt sein.

Ferner kann der Initialisierungswert einen konstanten Wert umfassen, welcher nach gewünschter Vorwahl einer oder mehrerer Komponenten an die Summierer der entsprechenden Komponenten übergeben wird. Dadurch kann insbesondere auch erreicht werden, dass ausgehend von beliebigen Betriebszuständen die Komponenten in beliebiger Reihenfolge zu- und abgeschaltet werden können.

Vorteilhaft wird mindestens einer Komponente mindestens ein Betriebskriterium zugeordnet und dieses Betriebskriterium beeinflusst den Initialisierungswert der Komponente.

Das Betriebskriterium umfasst dabei beispielsweise Informationen über die Betriebsstunden der Anlagenkomponenten. Es kann dann festgelegt werden, dass immer diejenige Komponente mit den meisten Betriebsstunden als erstes wieder in Betrieb geht. Eine derartige Komponente erhält dann einen vom Betriebskriterium entsprechend beeinflussten Initialisierungswert, welcher wie oben beschrieben zu den aufsummierten Wertzahlen der Komponente addiert und die so erhaltene Summe weiter verarbeitet wird.

Wenn eine Komponente mit hohen Betriebsstunden in Revision geht, so können nach erfolgter Revision Rücksetzbefehle auf die Betriebskriterien einwirken und diese so verändern, dass beispielsweise ein von den Betriebskriterien umfasster Betriebsstundenzähler zurückgesetzt und damit der Wert des Betriebskriteriums verändert wird.

Neben den beispielhaft genannten Betriebsstunden der Komponenten kann das Betriebskriterium weitere Verschleißkriterien umfassen. Der Einfluss auf den Initialisierungswert kann beispielsweise dadurch ermittelt werden, dass in einem Maximalwert-Auswahlglied diejenige Komponente ermittelt wird, deren Betriebskriterium den größten oder kleinsten Wert aufweist. Das Betriebskriterium dieser Komponente kann dabei weiterhin mit einem Referenzwert verglichen werden.

Beispielsweise weist eine Komponente den höchsten Betriebsstundenwert von 10.000 Betriebsstunden auf. Dieser Wert wird dann mit einem Referenzwert von beispielsweise 12.000 Betriebsstunden verglichen. Da der aktuelle Betriebsstundenwert der Komponente unterhalb des Referenzwerts liegt, spricht nichts dagegen, dass diese Komponente als nächstes wieder in Betrieb gehen soll und der entsprechende Initialisierungswert wird geeignet gesetzt, beispielsweise als konstanter Wert.

In einer weiteren vorteilhaften Ausgestaltung der Erfindung wird aufgrund von Betriebszustandswerten der Komponenten mit mindestens einer Sollwertvorgabe ein Zu- und/oder Abschaltbefehl für mindestens eine Komponente erteilt.

Bei dieser Ausgestaltung ist sichergestellt, dass automatisch auf geänderte Betriebsanforderungen oder Störungen reagiert werden kann. Beispielsweise kann einer Feuerungsanlage per Sollwertvorgabe eine höhere Leistung abverlangt werden. Als Ausgangspunkt für die Erzeugung von Zu- und/oder Abschaltbefehlen ist dann die Kenntnis des aktuellen Betriebszustands notwendig. Dieser Betriebszustand wird durch die Betriebszustandswerte der Komponenten repräsentiert. Ausgehend von den aktuellen Betriebszustandswerten und der Sollwertvorgabe können dann entsprechende Zu- und/oder Abschaltbefehle abgegeben werden, mittels welcher ein gewünschter Betriebszustand der Komponenten entsprechend der Sollwertvorgabe erreicht wird.

Die Erfindung führt weiterhin zu einem Steuerungssystem zum Betrieb einer mehrere Komponenten umfassenden technischen Anlage, wobei während des Betriebs der technischen Anlage jede Komponente, die in oder außer Betrieb geht, eine Bewertung mindestens einer anderen Komponente mit einer Wertzahl auslöst, die Wertzahlen jeder Komponente aufsummiert werden und aus den aufsummierten Wertzahlen diejenigen Komponenten ermittelt werden, welche als nächstes zu- oder abzuschalten sind, mit mindestens einem Betätigungslogikbaustein, mittels welchem mindestens einer Komponente mindestens ein Initialisierungswert zugeordnet und dieser Initialisierungswert zu den aufsummierten Wertzahlen der Komponente addiert werden kann.

Vorteilhaft umfast das Steuerungssystem weiterhin einen Betriebskriterienlogikbaustein, mittels welchem mindestens einer Komponente mindestens ein Betriebskriterium zugeordnet wird und wobei dieses Betriebskriterium den Initialisierungswert der Komponente beeinflusst.

In einer weiteren vorteilhaften Ausgestaltung umfasst das Steuerungssystem eine Schaltlogik, mittels welcher aufgrund von Betriebszustandswerten der Komponenten und mindestens einer Sollwertvergabe ein Zu- und/oder Abschaltbefehl für mindestens eine Komponente erteilbar ist.

Im Folgenden wird ein Ausführungsbeispiel der Erfindung näher dargestellt.

Es zeigen:
- FIG 1: ein gattungsgemäßes Steuerungssystem aus dem Stand der Technik, und
- FIG 2: ein erfindungsgemäßes Steuerungssystem.

FIG 1 zeigt ein Beispiel aus dem eingangs zitierten Stand der Technik für den Fall, dass Brenner 1 und 2 einer Verbrennungsanlage zugeschaltet worden sind und die dadurch ausgelöste Bewertung anderer Brenner.

Die Recheneinheit 20 erhält von den Brennern 1 und 2 jeweils deren Betriebszustandswerte S1 bzw. S2, welche im vorliegenden Fall mindestens die Information tragen, dass der betreffende Brenner 1 bzw. 2 zugeschaltet worden ist.

Die Betriebszustandswerte S1 und S2 werden auf Signalvorverarbeitungsstufen VV1 bzw. VV2 der Recheneinheit 20 geschaltet. Die Signalvorverarbeitungsstufen entnehmen die vorher genannte Information aus den Betriebszustandswerten S1 bzw. S2 und ordnen dem beispielhaft vorliegenden Betriebszustand Brenner 1 und 2 zugeschaltet je eine Betriebszustandszahl, beispielsweise den konstanten Wert 1, zu.

Die Betriebszustandszahl jedes Brenners wird auf dem jeweiligen Brenner zugeordnete Multiplizierer 30 geschaltet. Als weiteres Eingangssignal erhalten diese Multiplizierer jeweils noch mindestens eine Wertzahl WZ1, WZ2 bzw. WZ3.

Diese Wertzahlen WZ1, WZ2 bzw. WZ3 können z.B. den konstanten Werten 6, 3 bzw. 1 entsprechen.

Im vorliegenden Fall löst der zugeschaltete Brenner 1 eine Bewertung der anderen Brenner 2, 8, 3, 7, 4 und 6 aus; der zugeschaltete Brenner 2 löst eine Bewertung der anderen Brenner 1, 3, 4, 8, 5 und 7 aus.

Die Bewertung durch den zugeschalteten Brenner 1 erfolgt im vorliegenden Ausführungsbeispiel dadurch, dass die den anderen Brennern 2, 8, 3, 7, 4 und 6 zugeordneten Summierer Σ2, Σ8, Σ3, Σ7, Σ4 bzw. Σ6 die Ausgangssignale der Multiplizierer 30 wie in der FIG 2 dargestellt als Eingangssignale erhalten.

Jeder der Summierer Σ1, Σ2, Σ3, ... Σ8 summiert seine zugehörigen Eingangssignale auf und übergibt den jeweiligen Summenwert an nachgeordnete Signalnachverarbeitungsstufen NV1, NV2, NV3, ... NV8. In den Signalnachverarbeitungsstufen kann z.B. eine Nachbearbeitung des Ausgangssignals des jeweiligen Summierers Σ1, Σ2, Σ3, ... Σ8 erfolgen, indem z.B. der Ausgang des der jeweiligen Signalnachverarbeitungsstufe vorgeschalteten Summierers nur dann zu einer den Signalverarbeitungsstufen nachgeschalteten Verarbeitungseinheit 35 durchgeschaltet wird, wenn der der jeweiligen Signalnachverarbeitungsstufe bzw. dem jeweiligen Summierer zugeordnete Brenner nicht in Betrieb ist; wenn der jeweilige Brenner bereits in Betrieb ist, so kann die betreffende Signalnachverarbeitungsstufe z.B. anstelle des Ausgangswertes des jeweiligen Summierers einen anderen Wert als aktuelle Bewertung 40 an die Verarbeitungseinheit übergeben. Dieser Wert kann vielmehr so gewählt werden, dass die Verarbeitungseinheit 35 bereits in Betrieb befindliche Brenner erkennt und so verhindert, dass diese eine (nutzlosen) Einschaltbefehl als Befehl Z1, Z2, Z3, ... Z8 erhalten.

Die Hauptaufgabe der Verarbeitungseinheit 35 besteht darin, aus den Ausgangssignalen der Signalnachverarbeitungsstufen NV1, NV2, NV3, ... NV8 diejenigen Brenner zu ermitteln, welche als nächstes mittels der Befehle Z1, Z2, Z3, ... Z8 zu- oder abgeschaltet werden sollen. Ob der jeweilige Befehl Z1, Z2, Z3,...Z8 ein Ein- oder Ausschaltbefehl ist, hängt davon ab, in welchen nächsten Betriebszustand ausgehend vom aktuellen Betriebszustand der technischen Anlage übergegangen werden soll, um z.B. einen wirtschaftlichen Betrieb der Anlage zu erreichen. Wenn die Anlage ausgehend von einem aktuellen Betriebszustand auf einen Betriebszustand gebracht werden soll, welcher eine höhere Feuerungsleistung erfordert, so ermittelt die Verarbeitungseinheit 35 Zuschaltbefehle als Befehle Z1, Z2, Z3, ... Z8 für die Brenner, um einen wirtschaftlichen Betrieb der Anlage zu erreichen, beispielsweise indem diejenigen Brenner zugeschaltet werden, welche in Verbindung mit den bereits zugeschalteten Brennern ein homogenes Temperaturprofil im Brennraum 15 gewährleisten.

Wird hingegen ausgehend vom aktuellen Betriebszustand ein Betriebszustand gefordert, welcher mit einer niedrigeren Feuerungsleistung erfordert, so ermittelt die Verarbeitungseinheit 35 Abschaltbefehle als Befehle Z1, Z2, Z3, ... Z8 für die Brenner, so dass im Betrieb befindliche Brenner gezielt so abgeschaltet werden, dass die verbleibenden in Betrieb befindlichen Brenner einen wirtschaftlichen Betrieb der technischen Anlage gewährleisten, in dem sie beispielsweise ein homogenes Temperaturprofil in der Brennkammer erzeugen.

Die Verarbeitungseinheit 35 ist also ertüchtigt, gezielt je nach Anforderung an einen nächsten Betriebszustand sowohl Zuals auch Abschaltbefehle als Befehle Z1, Z2, Z3 ... Z8 zu erzeugen.

Die in FIG 1 beispielhaft erläuterte Bewertung soll nun noch zur weiteren Verdeutlichung mit konkreten Zahlenwerten für die Wertzahlen WZ1, WZ2 und WZ3 sowie für die Ausgänge der Signalvorverarbeitungsstufen VV1 und VV2 gezeigt werden.

Die Brenner 1 und 2 sollen zugeschaltet worden sein. Dies wird mittels der Betriebszustandswerte S1 und S2 an die Signalvorverarbeitungsstufen VV1 bzw. VV2 gemeldet. Die Signalvorverarbeitungsstufe VV1 erzeugt aus dem Betriebszustandswert S1 des Brenners 1 den Wert Eins und schaltet diesen gemäß FIG 2 auf drei der Multiplizierer 30. Der Multiplizierer 30a dient der Bewertung der beiden dem Brenner 1 benachbarten Brenner 2 und 8, der Multiplizierer 30b bzw. 30c der Bewertung der Brenner 3 und 7 bzw. 4 und 6. Der Brenner 5 wird durch den Brenner 1 nicht bzw. mit der Wertzahl Null bewertet. Die diesen drei Multiplizierern 30a, 30b, 30c als Multiplikatoren WZ1, WZ2, WZ3 zugeführten Werte seien die konstanten Werte Sechs, Drei bzw. Eins. Diese Werte entsprechen etwa dem Einfluss der zu bewertenden Brenner auf die Unsymmetrie des Flammenbildes, d.h. den Abständen des bewertenden Brenners 1 von den zu bewertenden Brennern. Der Ausgang des Multiplizierers 30a liefert folglich den Wert Sechs und führt diesen dem Summierer Σ2 (welcher dem Brenner 2 zugeordnet ist) und dem Summierer Σ8 (welcher dem Brenner 8 zugeordnet ist) zu.

Der Ausgang des Multiplizierers 30b liefert den Wert Drei, welcher auf die Summierer Σ3 (welcher dem dritten Brenner zugeordnet ist) und Σ7 (welcher dem siebten Brenner zugeordnet ist) aufgeschaltet wird.

Der Ausgang des dritten Multiplizierers 30c liefert den Wert Eins, welcher auf den Summierer Σ4 (welcher dem vierten Brenner zugeordnet ist) und auf den Summierer Σ6 (welcher dem Sechsten Brenner zugeordnet ist) geschaltet wird.

In analoger Weise soll die durch den Brenner 2 ausgelöste Bewertung der anderen Brenner erfolgen, so dass auf die Summierer Σ1 und Σ3 der Wert Sechs aufgeschaltet wird, auf die Summierer Σ4 und Σ8 der Wert Drei und auf die Summierer Σ5 und Σ7 der Wert Eins.

Als Ausgangswerte ermitteln die Summierer Σ1, Σ2, Σ3, Σ4, Σ5, Σ6, Σ7 und Σ8 durch Aufsummation die Werte Sechs, Sechs, Neun, Vier, Eins, Eins, Vier bzw. Neun. Diese Werte werden auf die entsprechend nachfolgenden Signalnachverarbeitungsstufen NV1, NV2, NV3, ... NV8 aufgeschaltet.

Bei einem nächsten zu erreichenden Betriebszustand soll eine Erhöhung der Feuerungsleistung gefordert sein, so dass durch die Verarbeitungseinheit 35 Zuschaltbefehle als Befehle Z1, Z2, Z3 ... Z8 für die Brenner derart ermittelt werden, dass die sich im nächsten Betriebszustand in Betrieb befindlichen Brenner eine gleichmäßige räumliche Verteilung im Brennraum 15 aufweisen, um dadurch ein homogenes Temperaturprofil zu erreichen.

Da die Brenner 1 und 2 sich bereits in Betrieb befinden, schalten die Signalvorverarbeitungsstufen VV1 bzw. VV2 nicht die Ausgänge der Summierer Σ1 und Σ2 auf die Verarbeitungseinheit 35, sondern z.B. den Konstanten Wert Tausend; die Ausgänge der übrigen Summierer Σ3, Σ4, Σ5, ... Σ8 werden durch die nachfolgenden Signalnachverarbeitungsstufen NV3, NV4, NV5, ... NV8 unverändert auf die Verarbeitungseinheit 35 aufgeschaltet.

Im vorliegenden Beispiel stehen der Verarbeitungseinheit 35 also acht Eingangssignale zur Verfügung, um die im nächsten Schritt zuzuschaltenden Brenner zu ermitteln.

Bei der beispielhaft dargestellten Wahl der Wertzahlen WZ1, WZ2 und WZ3 kann die Verarbeitungseinheit 35 nun die im nächsten Schritt zuzuschaltenden Brenner dadurch ermitteln, indem sie das oder die Minima ihrer Eingangswerte ermittelt und im nächsten Schritt die jeweils zu diesen Minima zugehörigen Brenner zuschaltet; im folgenden Beispiel würde dies bedeuten, dass im nächsten Schritt die Brenner 5 und 6 zugeschaltet werden. Nach Zuschaltung von Brenner 5 und 6 befinden sich die Brenner 1, 2, 5 und 6 in Betrieb.

Durch die beschriebene Zuschaltung der Brenner 5 und 6 zu den bereits in Betrieb befindlichen Brennern 1 und 2 ist eine gleichmäßige Befeuerung des Brennraums 15 gewährleistet, da bei der räumlichen Brenneranordnung nach FIG 1 auf diese Weise bezüglich des Mittelpunkts des Brennraums 15 gegenüberliegende Brennerpaare betrieben werden, was zu einer gleichmäßigen Befeuerung des Brennraums 15 und damit zu einem wirtschaftlichen Betrieb der technischen Anlage führt.

Das in FIG 1 dargestellte Prinzip der Bewertung kann leicht verallgemeinert werden: Man wählt einen bestimmten Brenner als Bezugsbrenner und definiert zu diesem ein erstes, ein zweites und ein drittes Nachbarbrennerpaar. Zum Brenner 3 ist das so definierte erste Nachbarbrennerpaar das durch die Brenner 2 und 4 gebildete Brennerpaar, das zweite Brennerpaar das durch die Brenner 5 und 1 gebildete Brennerpaar und das dritte Nachbarbrennerpaar das durch die Brenner 6 und 8 gebildete Brennerpaar.

Geht nun der Brenner 3 in Betrieb, so löst beispielsweise er eine Bewertung der Brenner 2 und 4 mit dem Wert Sechs, eine Bewertung der Brenner 5 und 1 mit dem Wert Drei und eine Bewertung der Brenner 6 und 8 mit dem Wert Eins aus. Geht nun ein anderer Brenner in Betrieb, so wählt man diesen als Bezugsbrenner und bildet in analoger Weise ein weiteres erstes, ein weiteres zweites und ein weiteres drittes Nachbarbrennerpaar.

In FIG 2 ist schematisch ein Steuerungssystem 1 dargestellt, wobei ein Betätigungslogikbaustein 5 des Steuerungssystems 1 der Recheneinheit 20 aus FIG 1 entsprechen kann.

Innerhalb des Betätigungslogikbausteins 5 werden Befehle Z1, Z2, Z3, ... Z8 ermittelt, mittels welcher in einem nächsten Schritt bestimmte Komponenten der technischen Anlage zuund/oder abgeschaltet werden sollen.

Der Betätigungslogikbaustein 5 umfasst dazu einen Befehlslogikbaustein 10, sowie Signalvorverarbeitungsstufen VV1, VV2, VV3, ... VV8. Die Funktion des Betätigungslogikbausteins 5 kann dabei der Beschreibung zu FIG 1 entnommen werden (siehe dort Recheneinheit 20).

Das Steuerungssystem 1 umfasst weiterhin einen Vorwahllogikbaustein 15 zur Erzeugung von Initialisierungswerten I1, I2, I3, ... I8. Die Initialisierungswerte wirken dabei auf Summierer innerhalb des Befehlslogikbausteins 10 ein, mittels welchem die Wertzahlen jeder Komponente addiert werden.

Mittels der Initialisierungswerte I1, I2, I3, ... I8 kann folglich auf die summierte Wertzahl einer oder mehrerer Komponenten der technischen Anlage eingewirkt und dadurch auf die Ermittlung der Befehle Z1, Z2, Z3, ... Z8 Einfluss genommen werden. Dadurch ist es insbesondere möglich, ausgehend von einem Betriebszustand der Komponenten, aus welchem zur Erreichung eines gewünschten Betriebszustand mehrere gleichwertige Alternativen existieren, einen oder mehrere eindeutige Befehle Z1, Z2, Z3, ... Z8 zu erzeugen.

Mittels einer Befehlseingabe 20 des Vorwahllogikbausteins 15 können bestimmte Komponenten der technischen Anlage manuell angesprochen und jeweils zugeordnete Initialisierungswerte I1, I2, I3, ... I8 manuell gesetzt werden. Realisiert werden kann dies beispielsweise durch Vorgabe eines festen konstanten Werts als Befehlseingabe 20, welcher als Initialisierungswert zur aufsummierten Wertzahl der angesprochenen Komponente addiert wird.

Außer der genannten manuellen Erzeugung der Initialisierungswerte I1, I2, I3, ... I8 kann deren Ermittlung aufgrund von Betriebskriterien B1, B2, B3, ... B8 erfolgen, welche von einem vorgeschalteten Betriebskriterienlogikbaustein 25 ermittelt werden.

Derartige Betriebskriterien B1, B2, B3, ... B8 können Informationen über bereits geleistete Betriebsstunden der Komponenten umfassen, so dass die Initialisierungswerte I1, I2, I3, ... I8 der betreffenden Komponenten abhängig von diesen Betriebskriterien B1, B2, B3, ... B8 ermittelt werden. Beispielsweise wird einer Komponente ein zahlenmäßig hoher Initialisierungswert zugeordnet, wenn das entsprechende Betriebskriterium einen hohen Wert aufweist.

Der Betriebskriterienlogikbaustein 25 umfasst weiterhin Eingänge zur Erfassung von Rücksetzbefehlen 30 und Bereitschaftssignalen 35.

Mittels der Rücksetzbefehle 30 können die Betriebskriterien B1, B2, B3, ... B8 beeinflusst werden. Beispielsweise wird mittels der Rücksetzbefehle 30 ein Betriebsstundenzähler einer oder mehrerer Komponenten manuell zurückgesetzt und damit das entsprechende Betriebskriterium ebenfalls zurückgesetzt.

Die Betriebskriterien B1, B2, B3, ... B8 können auch Informationen über die Verfügbarkeit der Komponenten umfassen. Dazu werden Bereitschaftssignale 35 ausgewertet, welche Aufschluss drüber geben, ob eine oder mehrere Komponenten betriebsbereit sind. Z.B. wird mittels der Bereitschaftssignale 35 die Nicht-Verfügbarkeit einer Komponente gemeldet. Daraufhin setzt der Betriebskriterienlogikbaustein 25 das dieser Komponente zugeordnete Betriebskriterium auf einen entsprechenden Wert, so dass der nachgeschaltete Vorwahllogikbaustein 15 mittels dieser Information eine sinnvolle Ermittlung der Initialisierungswerte I1, I2, I3, ... I8 vornehmen kann.

Eine Schaltlogik 40 des Steuerungssystems 1 dient zur Ermittlung von Zuschaltbefehlen 50 und Abschaltbefehlen 55 für Anlagenkomponenten, um auf geänderte Betriebsbedingungen der technischen Anlage, welche beispielsweise als neue Leistungsvorgabe vorgegeben werden, zu reagieren.

Eine Betriebsbedingung wird als Sollwertvorgabe 45 auf die Schaltlogik 40 geschaltet. Des Weiteren erhält die Schaltlogik 40 Betriebszustandswerte S1, S2, S3, ... S8, welche Informationen über den aktuellen Betriebszustand der Komponenten umfassen. Die Betriebszustandswerte umfassen dabei mindestens Informationen darüber, welche Komponenten sich aktuell in Betrieb befinden.

Wird nun eine neue Betriebsbedingung mittels der Sollwertvorgabe 45 an die Schaltlogik 40 übermittelt, so kann diese aufgrund der Kenntnis der Betriebszustandswerte S1, S2, S3, ... S8 feststellen, welche Zuschaltbefehle 50 und/oder Abschaltbefehle 55 gegeben werden müssen, um den neuen vorgegebenen Betriebszustand gemäß der Sollwertvorgabe 45 zu erreichen.

## Patentansprüche

1. Verfahren zum Betrieb einer mehrere Komponenten umfassenden technischen Anlage, insbesondere einer Verbrennungsanlage zum Erzeugen von elektrischer Energie,
wobei während des Betriebs der technischen Anlage jede Komponente, die in oder außer Betrieb geht, eine Bewertung mindestens einer anderen Komponente mit einer Wertzahl auslöst, die Wertzahlen jeder Komponente aufsummiert werden und aus den aufsummierten Wertzahlen diejenigen Komponenten ermittelt werden, welche als nächstes zu- oder abzuschalten sind,
**dadurch gekennzeichnet, dass**
mindestens einer Komponente mindestens ein Initialisierungswert (I1, I2, I3 ... I8) zugeordnet und dieser Initialisierungswert (I1, I2, I3 ... I8) zu den aufsummierten Wertzahlen der Komponente addiert wird.

2. Verfahren nach Anspruch 1,
**dadurch gekennzeichnet, dass**
mindestens einer Komponente mindestens ein Betriebskriterium (B1, B2, B3 ... B8) zugeordnet wird und dieses Betriebskriterium (B1, B2, B3 ... B8) den Initialisierungswert (I1, I2, I3 ... I8) der Komponente beeinflusst.

3. Verfahren nach einem der Ansprüche 1 oder 2,
**dadurch gekennzeichnet, dass**
aufgrund von Betriebszustandswerten (S1, S2, S3 ... S8) der Komponenten und mindestens einer Sollwertvorgabe (45) ein Zu- (50) und/oder Abschaltbefehl (55) für mindestens eine Komponente erteilt wird.

4. Steuerungssystem (1) zum Betrieb einer mehrere Komponenten umfassenden technischen Anlage, insbesondere einer Verbrennungsanlage zum Erzeugen von elektrischer Energie,
wobei während des Betriebs der technischen Anlage jede Komponente, die in oder außer Betrieb geht, eine Bewertung mindestens einer anderen Komponente mit einer Wertzahl auslöst, die Wertzahlen jeder Komponente aufsummiert werden und aus den aufsummierten Wertzahlen diejenigen Komponenten ermittelt werden, welche als nächstes zu- oder abzuschalten sind, **gekennzeichnet durch**
mindestens einen Betätigungslogikbaustein (15), mittels welchem mindestens einer Komponente mindestens ein Initialisierungswert (I1, I2, I3 ... I8) zugeordnet und dieser Initialisierungswert (I1, I2, I3 ... I8) zu den aufsummierten Wertzahlen der Komponente addiert werden kann.

5. Steuerungssystem (1) nach Anspruch 4,
**gekennzeichnet durch**
mindestens einen Betriebskriterienlogikbaustein (25), mittels welchem mindestens einer Komponente mindestens ein Betriebskriterium (B1, B2, B3 ... B8) zugeordnet wird und dieses Betriebskriterium (B1,B2,B3...B8) den Initialisierungswert (I1, I2, I3 ... I8) der Komponente beeinflusst.

6. Steuerungssystem (1) nach einem der Ansprüche 4 oder 5,
**gekennzeichnet durch**
mindestens eine Schaltlogik (40), mittels welcher aufgrund von Betriebszustandswerten (S1, S2, S3 ... S8) der Komponenten und mindestens einer Sollwertvorgabe (45) ein Zu- (50) und/oder Abschaltbefehl (55) für mindestens eine Komponente erteilbar ist.
